# EUROPÄISCHE PATENTSCHRIFT

(11) **EP 2 112 006 B1**
(45) Veröffentlichungstag und Bekanntmachung des Hinweises auf die Patenterteilung: **02.06.2010**
(21) Anmeldenummer: 09157919.3
(22) Anmeldetag: 15.04.2009
(51) Int. Cl.: B60C 25/14

(54) **Füllglocke zum Füllen eines schlauchlosen Reifens**
Filling bell for filling a tubeless tyre
Cloche de remplissage destinée à remplir un pneu sans chambre à air

(30) Priorität: 22.04.2008 DE 102008020205
(43) Veröffentlichungstag der Anmeldung: 28.10.2009
(73) Patentinhaber: Schenck RoTec GmbH, 64293 Darmstadt (DE)
(72) Erfinder: Rogalla, Martin, 64297 Darmstadt (DE); Lehr, Werner, 64397 Modautal (DE)
(74) Vertreter: Haar, Lucas Heinz Jörn

(56) Entgegenhaltungen:
- EP-A- 1 671 820
- DE-A1- 19 600 323
- DE-A1- 19 801 455

## Beschreibung

Die Erfindung betrifft eine Füllglocke zum Füllen eines auf einer Felge angeordneten, schlauchlosen Reifens mit einem unter Druck stehenden Gas, wobei die Füllglocke eine an eine Seitenwand des Reifens andrückbare Dichtfläche mit einer zentralen Öffnung aufweist, in welche die Felge teilweise eindringen kann.

Bei der automatischen Serienfertigung werden Kraftfahrzeugräder mit schlauchlosen Reifen üblicherweise mittels einer Füllmaschine mit Druckluft befüllt. Die Felge mit montiertem Reifen wird hierbei auf eine geeignete Unterlageplatte gelegt, die das Rad beim Befüllvorgang nach unten hin abdichtet. Auf die Reifenoberseite wird eine Füllglocke aufgesetzt, die den Reifen und die Felge nach oben hin abdichtet und durch welche die Reifenseitenwand beim Befüllvorgang so weit nach unten gedrückt wird, dass zwischen Reifenwulst und Felge ein Ringspalt entsteht, durch den die in die Füllglocke geleitete Druckluft in den Reifen einströmen kann. Durch die eingeströmte Druckluft wird der Reifen mit großer Kraft gegen die Auflageplatte und die Füllglocke gepresst. Ist der Fülldruck erreicht, so wird die Füllglocke angehoben, wodurch sich die Reifenseitenwände in axialer Richtung auseinander bewegen, bis die Reifenwulste ihre jeweilige Sitzposition auf der Felge eingenommen haben. Für einen solchen Füllvorgang muss die Füllglocke eine Öffnung haben, deren Durchmesser groß genug ist, damit sie nicht an die Felge anstößt, sondern über die Felge gestülpt werden kann. Der Durchmesser der Öffnung darf andererseits aber nicht so groß sein, dass die Füllglocke die obere Reifenseitenwand radial außerhalb ihres Hochpunktes kontaktiert. Die Füllglocke würde nämlich dann die Radialbewegung des Reifens behindern, was dazu führen könnte, dass der Reifenwulst nicht richtig in seinen Sitz springt. Läge die Dichtkante der Glocke gar in der Nähe der Lauffläche des Reifens, dann könnten eine hohe Leckage und Fülldruckungenauigkeit die Folge sein. Eine Füllglocke eignet sich somit nur für einen begrenzten Größenbereich von Kraftfahrzeugrädern. So können beispielsweise mit einer Füllglocke bestimmter Größe in der Regel nur Reifen gefüllt werden, deren Wulstsitzdurchmesser im Bereich von zwei Zollgrößen liegt.

Um mit einer Reifenfüllstation Reifen von größerer Größenabweichung füllen zu können, ist es unter anderem aus EP 1 125 772 B1 bekannt, eine Reifenfüllglocke mit zumindest zwei Füllringen unterschiedlichen Durchmessers zu verwenden, wobei je nach Reifengröße der kleinere oder der größere Füllring zum Einsatz kommt.

Aus der gattungsbildenden DE 198 01 455 A1 ist eine Reifenfülleinrichtung mit drei Füllringen und einem Felgendichtring bekannt, der innerhalb des kleinsten Füllrings angeordnet ist und mittels einer Stelleinrichtung auf den jeweils geforderten größeren Durchmesser aufgeweitet wird, wenn einer der beiden größeren Füllringe benutzt wird.

Der Erfindung liegt die Aufgabe zugrunde, eine Reifenfüllglocke der angegebenen Art zu schaffen, die sich auf verschiedene Reifengrößen einstellen lässt und sich durch einen großen Einstellbereich auszeichnet.

Die Aufgabe wird durch eine Füllglocke mit den in Anspruch 1 angegebenen Merkmalen gelöst. Vorteilhafte Ausgestaltungen der Füllglocke sind in den weiteren Ansprüchen angegeben.

Die Füllglocke nach der Erfindung weist eine an einer Seitenwand des Reifens andrückbare Dichtfläche mit einer zentralen Öffnung für das Eindringen der Felge auf, wobei die Dichtfläche von einem die Öffnung umgebenden Ringflansch gebildet ist, der eine Mehrzahl keilförmiger Segmente aufweist, deren Breite mit dem Abstand von der Öffnung zunimmt und die relativ zueinander und im wesentlichen radial zur Öffnung bewegbar sind. Bei der erfindungsgemäßen Füllglocke kann der Durchmesser der Dichtfläche durch radiales Bewegen und gegeneinander Verschieben der Segmente stufenlos verändert werden und dadurch im optimaler Weise an die jeweils zu befüllende Reifengröße genau angepasst werden. Die erfindungsgemäße Füllglocke hat weiterhin den Vorteil, dass die Dichtfläche eine relativ große Erstreckung in radialer Richtung hat und dadurch eine breite Anlagefläche bildet, welche die Beanspruchung des Reifens beim Füllvorgang vermindert. Weiterhin bietet die erfindungsgemäße Füllglocke die Möglichkeit, am Ende des Füllvorgangs die Dichtfläche in radialer Richtung zu vergrößern, um dadurch die radiale Bewegung der Reifenseitenwand zu unterstützen, damit der Reifenwulst leichter über den Hump in seinen Sitz auf der Felge springen kann.

Nach einem weiteren Vorschlag der Erfindung sind die Segmente an ihren divergierenden Rändern formschlüssig und längsbeweglich miteinander verbunden. Durch eine solche Verbindung der Segmente wird eine geschlossene, ringförmige Einheit gebildet, die eine unkontrollierte individuelle Bewegung der einzelnen Segmente verhindert. Alle Segmente können nur gemeinsam in gleicher Richtung, entweder radial nach außen oder radial nach innen, verschoben werden, wobei das Maß der Verschiebung bei allen Elementen jeweils gleich groß ist. Die Segmente bleiben immer in Eingriff miteinander und die von ihnen umgebene Öffnung behält immer ihre zentrische Lage.

Um die Füllglocke wirksam nach außen abdichten zu können, ist weiterhin vorgesehen, dass zwischen den divergierenden Rändern benachbarter Segmente jeweils ein Dichtelement angeordnet ist. Das Dichtelement ist vorzugsweise ein Profilstreifen aus Kunststoff, der den Zwischenraum zwischen den Segmenten ausfüllt und eine Gleitführung zum Bewegen der Segmente bildet. Die Segmente können außerdem Bohrungen zur Zuführung eines Schmiermittels in dem Bereich der Gleitführung haben. Auf diese Weise lassen sich Reibwiderstände verringern, die dem Verstellen der Segmente entgegenwirken.

Auf ihrer der Dichtfläche abgekehrten Seite können die Segmente nach einem weiteren Vorschlag der Erfindung einen Lagerzapfen haben, mit dem sie an einer Trägerplatte radial beweglich und drehbar geführt und gehalten sind. Weiterhin kann ein Betätigungselement vorgesehen sein, durch das die Segmente gemeinsam bewegbar sind. Eine einfache und vorteilhafte Ausgestaltung des Bestätigungselements besteht aus einer an der Füllglocke drehbar gelagerten Steuerscheibe, die auf die Lagerzapfen der Segmente einwirkende, sich radial und in Umfangsrichtung erstreckende Wirkflächen hat.

Die Erfindung wird nachfolgend anhand von Ausführungsbeispielen näher erläutert, die in der Zeichnung dargestellt sind. Es zeigen
- Figur 1: eine Ansicht der Dichtfläche einer Füllglocke nach der Erfindung in einer Einstellung mit kleinstem Durchmesser,
- Figur 2: eine Ansicht der Dichtfläche einer Füllglocke nach der Erfindung in einer Einstellung mit größtem Durchmesser,
- Figur 3: eine perspektivische Darstellung eines ersten Ausführungsbeispiels einer Füllglocke nach der Erfindung,
- Figur 4: einen Querschnitt durch eine Verbindungsstelle zwischen zwei Segmenten einer Füllglocke nach der Erfindung,
- Figur 5: eine Teilansicht der Füllglocke gemäß Figur 3 in Anlage an einem Reifen und eingestellt auf einen kleineren Durchmesser,
- Figur 6: eine Teilansicht der Füllglocke gemäß Figur 3 in Anlage an einem Reifen und eingestellt auf größtmöglichen Durchmessern,
- Figur 7: eine Teilansicht einer anderen Ausführungsform einer Füllglocke nach der Erfindung,
- Figur 8: einen vergrößerten Ausschnitt der Ansicht gemäß Figur 7 und
- Figur 9: eine schematische Darstellung zur Veranschaulichung der Reifenbewegung bei Beendigung eines Reifenfüllvorgangs.

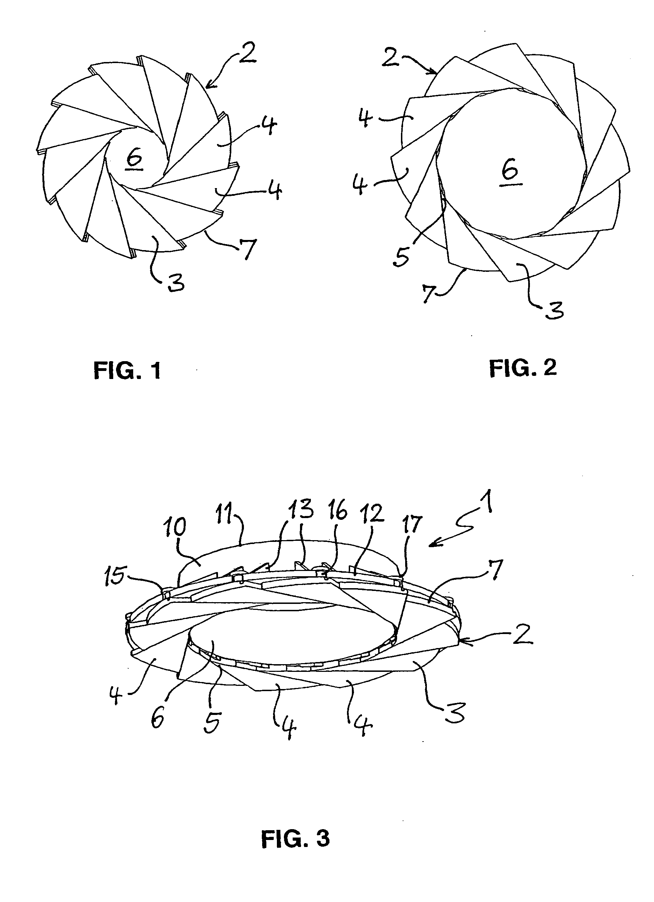

Die in den Figuren 1 bis 3 dargestellte Füllglocke 1 hat eine von einem Ringflansch 2 gebildete ebene, ringförmige Dichtfläche 3. Der Ringflansch 2 ist aus zwölf kongruenten, keilförmigen Segmenten 4 zusammengesetzt, die einen Keilwinkel von 30° haben. Die Segmente 4 haben nach innen gerichtete spitze Enden 5 und einen kreisbogenförmigen äußeren Rand 7. In gleichsinniger Anordnung aneinandergereiht bilden die 12 Segmente 4 einen geschlossenen, sich über einen Winkel von 360° erstreckenden Ring. Die Segmente 4 sind so angeordnet, dass sie mit ihren divergierenden Rändern jeweils dicht aneinander anliegen.

Der Durchmesser des von den Segmenten 4 gebildeten Ringflanschs 2 ist davon abhängig, welche Relativposition die einzelnen Segmente 4 zueinander einnehmen. Bei der in Figur 1 gezeigten Anordnung sind die spitzen, nach innen gerichteten Enden 5 der Segmente 4 sehr nahe beieinander angeordnet. Entsprechend verbleibt im Zentrum des Ringflansches 2 nur eine relativ kleine Öffnung 6 frei. Rein geometrisch betrachtet können die Segmente 4 auch so weit zur Mitte hin verschoben werden, dass ihre spitzen Enden 5 sich in einem Punkt treffen, wodurch eine geschlossene Kreisfläche entstünde. Für die Schaffung einer Füllglocke zum Füllen von Reifen wäre dies jedoch wenig nützlich, da im Zentrum der Füllglocke eine Öffnung für das Eindringen der Felge vorgesehen sein muss.

Werden die Segmente 4, wie in Figur 2 gezeigt, in der Weise gegeneinander verschoben, dass ihre spitzen Enden 5 einen größeren Abstand voneinander erhalten, so vergrößert sich dadurch der Durchmesser der Öffnung 6 und entsprechend auch der Durchmesser des Ringflansches 2.

Die Außenkontur des Ringflansches 2 ist in den beiden in Figur 1 und Figur 2 gezeigten Stellungen der Segmente 4 unregelmäßig. Dies ist dadurch bedingt, dass der äußere Rand 7 der Segmente 4 einem Außendurchmesser des Ringflansches 2 entspricht, der größer ist als der Außendurchmesser in Figur 1 und kleiner als der Außendurchmesser in Figur 2. Die Wahl eines mittleren Durchmessers zur Bestimmung der Außenkontur der Segmente 4 hat den Vorteil, dass die sich ergebenden Abweichungen der Außenkontur von der Kreisform sowohl beim Unterschreiten als auch beim Überschreiten des mittleren Durchmessers nicht zu groß werden und eine ausreichend große, geschlossenen Ringfläche verfügbar bleibt.

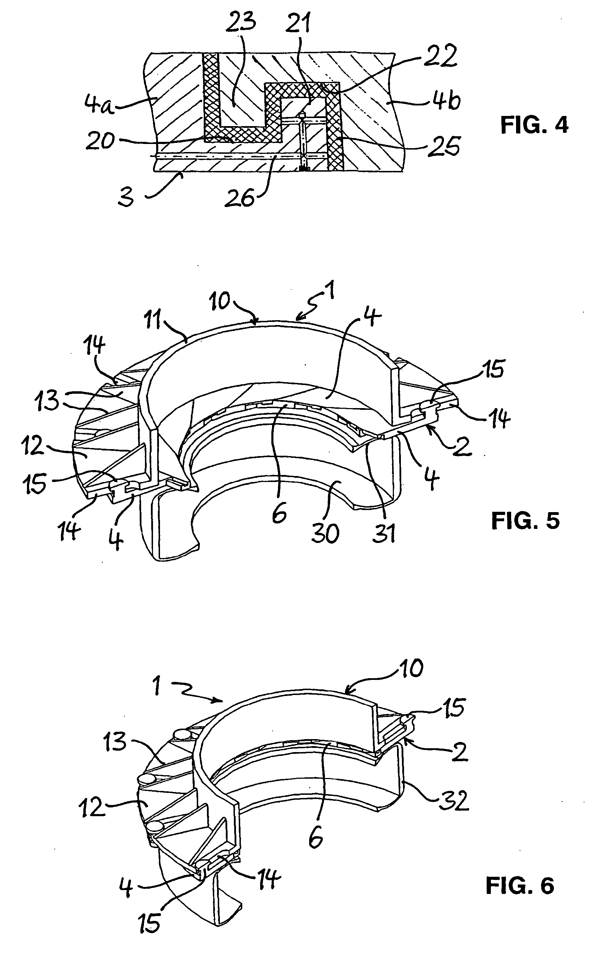

Aus Figur 3 ist zu ersehen, wie der aus Segmenten 4 gebildete Ringflansch 2 an der Füllglocke 1 angeordnet und befestigt ist. Die Füllglocke 1 weist einen zylindrischen Glockenring 10 auf, dessen Innendurchmesser die maximale Größe der Glockenöffnung bestimmt. An dem oberen Rand 11 des Glockenrings 10 wird eine hier nicht dargestellte Deckelplatte befestigt, die den Glockenring 10 nach oben dicht verschließt und an der die notwendigen Anschlüsse zum Füllen und Entleeren des Glockeninnenraums angebracht sind. Die Deckelplatte ist außerdem an einer Hubvorrichtung befestigt, mit der die Füllglocke 1 in Richtung der Zylinderachse des Glockenrings 10 bewegbar ist. Am unteren Rand des Glockenrings 10 ist eine ringförmige Trägerplatte 12 befestigt, die sich vom Rand des Glockenrings 10 radial nach außen erstreckt. Zur Versteifung ist die Trägerplatte 12 auf ihrer Oberseite zusätzlich durch radiale Stege 13 mit der Außenseite des Glockenrings 10 verbunden, wie besonders deutlich in den Figuren 5 und 6 zu sehen ist. Die Trägerplatte 12 weist in regelmäßigem Abstand eine der Zahl der Segmente 4 entsprechende Zahl von Radialschlitzen 14 auf, die radial nach außen offen sind.

An der Unterseite der Trägerplatte 12 sind die Segmente 4 angeordnet, die gemeinsam den Ringflansch 2 bilden. Die Segmente 4 sind hierbei mittels Lagerzapfen 15 an der Trägerplatte 12 gehalten und geführt. Jedes Segment 4 trägt einen Lagerzapfen 15 auf, der mit einem zylindrischen Schaft 16 einen Radialschlitz 14 in der Trägerplatte 12 durchgreift. An seinem freien Ende trägt der Schaft 16 einen Kopf 17 größeren Durchmessers, der auf der Oberseite der Trägerplatte 12 aufliegt und dadurch das mit dem Lagerzapfen 15 verbundene Segment 4 an der Trägerplatte 12 festhält. In radialer Richtung sind die Lagerzapfen 15 längs der Radialschlitze 14 verschiebbar, um die Durchmesseränderung des Ringflansches 2 zu ermöglichen.

Wie insbesondere aus Figur 4 zu ersehen, sind die Segmente 4 an ihren benachbarten Rändern formschlüssig und längsverschieblich miteinander verbunden. Figur 4 zeigt einen Querschnitt durch eine Verbindungsstelle zwischen dem rechten Rand eines ersten Segments 4a und dem linken Rand eines zweiten Segments 4b. Der rechte Rand des Segments 4a weist auf der der Dichtfläche 3 abgekehrten Oberseite eine Längsnut 20 und eine die Längsnut 20 auf der Außenseite begrenzende Rippe 21 auf. Längsnut 20 und Rippe 21 haben einen rechteckigen Querschnitt, und die Breite der Längsnut 20 ist annähernd doppelt so groß wie die Breite der Rippe 21. Die Höhe der Rippe 21 beträgt etwa zwei Drittel der Dicke des Segments 4a. Der linke Rand des Segments 4b ist spiegelbildlich zum rechten Rand des Segments 4a ausgebildet und weist dementsprechend auf der Seite der Dichtfläche 3 eine Längsnut 22 und eine Rippe 23 auf. Beide Segmente sind so zueinander angeordnet, dass ihre Rippen 21, 23 jeweils in die Längsnuten 20 bzw. 22 eingreifen. Zwischen den Begrenzungsflächen der Rippen 21, 23 und der Längsnuten 20, 22 verbleibt hierbei ein S-förmiger Spalt von etwa konstanter Breite, der mit einem Dichtelement 25 in Form eines Profilstreifens ausgefüllt ist. Durch das Dichtelement 25 wird die Verbindungsstelle sowohl in Längsrichtung der Nuten und Rippen als auch in Querrichtung abgedichtet. Das Dichtelement 25 ist beispielsweise durch Kleben an dem Segment 4b befestigt. Auf dem Segment 4a kann das Dichtelement 25 gleiten. Hierdurch wird eine Relativbewegung zwischen den Segmenten 4a, 4b in Richtung der Längsnuten 20, 22 ermöglicht. Um den Reibwiderstand zwischen dem Dichtelement 25 und dem Segment 4a herabzusetzen, weist das Segment 4a Bohrungen 26 zur Zuführung eines Schmiermittels in den Gleitspalt auf.

Die beschriebene Verbindung aus Längsnuten, Rippen und Dichtelement ist an allen benachbarten Rändern der Segmente 4 vorgesehen, so dass alle Segmente 4 zu einer ringförmigen Einheit miteinander verbunden sind. Innerhalb dieser Einheit können die einzelnen Segmente 4 nur gemeinsam, im gleichen Sinne und um den gleichen Betrag ihre Lage ändern. Der durch die Segmente 4 gebildete Ringflansch 2 kann somit durch Verschieben der Segmente 4 in seinem Durchmesser verändert werden, wobei er seine geschlossene Ringform immer beibehält und sich lediglich die Kontur des inneren oder äußeren Randes ändert. Die Lagerung des Ringflansches 2 mit Hilfe der an den Segmenten 4 angeordneten Lagerzapfen 15 in den Radialschlitzen 14 der Trägerplatte 12 sorgt weiterhin dafür, dass der Ringflansch 2 seine konzentrische Lage zum Glockenring 10 in allen Größenstellungen beibehält.

Figur 5 zeigt eine Einstellung, bei der die Öffnung 6 in dem Ringflansch 2 deutlich kleiner ist als der Innendurchmesser des Glockenrings 10. Diese Einstellung ist zum Füllen eines kleineren Reifens 30 gedacht, der hier ohne die dazugehörige Radfelge gezeigt ist. Der Ringflansch 2 liegt hierbei mit seiner Dichtfläche 3 auf der Seitenwand 31 des Reifens 30 auf und dichtet dadurch das Innere der Füllglocke 1 an dem Reifen 30 nach außen ab. Die beim Füllen auf den Ringflansch 2 einwirkende Druckkraft wird von dem Ringflansch 2 auf die Trägerplatte 12 unmittelbar übertragen, wobei an den Segmenten 4 auftretende Kippkräfte von den Lagerzapfen 15 aufgenommen werden.

Den Einsatz der Füllglocke 1 an einem Reifen 32 größeren Durchmessers ist in Figur 6 gezeigt. Der Ringflansch 2 ist hierbei so eingestellt, dass seine Öffnung 6 den größtmöglichen Innendurchmesser hat, der etwa gleich dem Innendurchmesser des Glockenrings 10 ist. In dieser Lage liegen die Segmente 4 des Ringflansches 2 mit ihrer Rückseite vollständig an der Trägerplatte 12 an, so dass die beim Füllvorgang auftretenden Druckkräfte problemlos angestützt werden können.

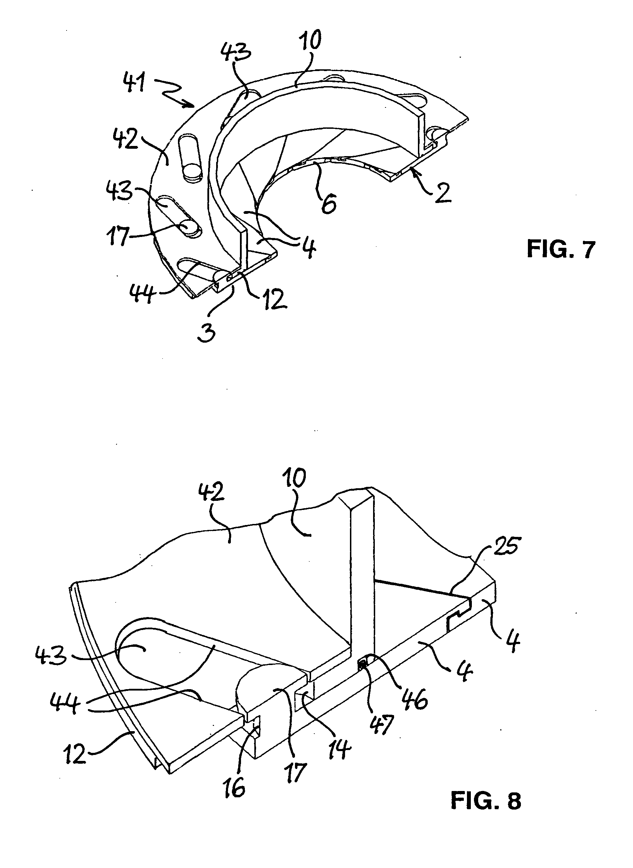

Die Figuren 7 und 8 zeigen ein weiteres Ausführungsbeispiel einer Füllglocke 41, die abweichend von der Füllglocke 1 eine Einrichtung zum synchronen Verstellen des Ringflansches 2 und der Segmente 4 aufweist. Hierzu ist die Oberseite der Trägerplatte 12 eben ausgeführt und nicht von Stegen 13 unterbrochen. Auf der Trägerplatte 12 ist eine Steuerscheibe 42 angeordnet, die in regelmäßigen Abständen Öffnungen 43 hat, die jeweils die Form eines Langlochs mit parallelen Längsseiten und halbkreisförmigen Endabschnitten haben. Die Öffnungen 43 sind rotationssymmetrisch und derart schräg angeordnet, dass ihre parallelen Seitenwände 44 etwa in einem Winkel von 45° zu einer sie kreuzenden Radialen bilden. In jede Öffnung 43 greift ein Kopf 17 eines Lagerzapfens 15 ein, durch den ein Segment 4 an der Trägerplatte 12 gehalten ist. Die Breite der Öffnungen 43 ist geringfügig größer als der Durchmesser der Köpfe 17, so dass die Köpfe 17 sich in den Öffnungen 43 in Längsrichtung leicht bewegen können. Die Steuerscheibe 42 umgibt den Glockenring 10 und ist an diesem drehbar gelagert.

In der in den Figuren 7 und 8 gezeigten Stellung der Steuerscheibe 42 sind die Segmente 4 sehr weit radial nach innen bewegt, so dass sie nach innen über den Glockenring 10 hinausragen und eine Öffnung 6 bilden, die erheblich kleiner ist als der Innendurchmesser des Glockenrings 10. Um die Segmente 4 im Sinne einer Vergrößerung der Öffnung 6 zu verstellen, genügt es, die Steuerscheibe 42 in der Zeichnung entgegen dem Uhrzeigersinn gegenüber der Trägerplatte 12 zu drehen. Durch eine solche Drehung werden die Köpfe 17 der einzelnen Segmente 4 von den Seitenwänden 44 der Öffnungen 43 radial nach außen gedrängt und die Segmente 4 entsprechend verschoben, wobei die Segmente 4 auch an ihren formschlüssig verbundenen Rändern relativ zueinander gleiten und eine leichte Drehung um ihre Zapfenachse gegenüber der Trägerplatte 12 ausführen. Ungeachtet der verschiedenen Momentanbewegungen ergibt sich jedoch eine Vergrößerung des Ringflansches 2 und damit auch der Öffnung 6, wobei die Öffnung 6 ihre konzentrische Lage zum Glockenring 10 nicht ändert. Der größtmögliche Durchmesser der Öffnung 6 ist erreicht, wenn die Köpfe 17 der Lagerzapfen 15 in die radial äußere Endstellung in den Öffnungen 43 der Steuerscheibe 42 gelangt sind.

Das Drehen der Steuerscheibe 42 kann entweder von Hand mit Hilfe eines geeigneten Hebels oder in automatisch arbeitenden Anlagen mit Hilfe eines geeigneten motorischen Antriebs erfolgen.

Aus Figur 8 ist zu ersehen, wie die Segmente 4 gegenüber der Trägerplatte 12 abgedichtet sein können. Die Trägerplatte 12 weist hierzu auf ihrer Unterseite eine Ringnut 46 auf, in der ein Dichtring 47, insbesondere ein O-Ring, angeordnet ist, der auf den Segmenten 4 aufliegt. Hierdurch ist sichergestellt, dass beim Füllen von Reifen die Druckluft bzw. das Druckgas nicht zwischen der Trägerplatte 12 und den Segmenten 4 nach außen entweichen kann.

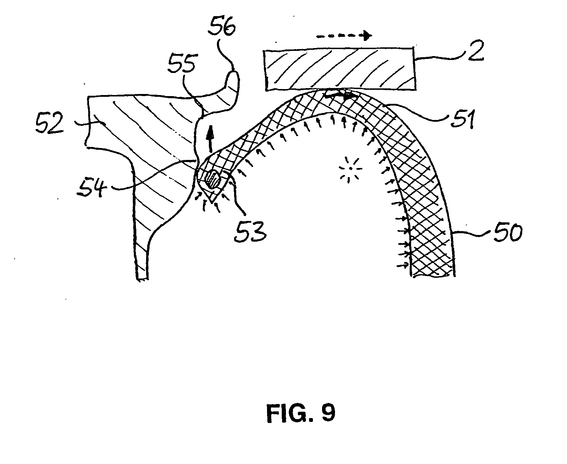

Neben der stufenlosen Anpassung des Durchmessers der Dichtfläche der Reifenfüllglocke an verschieden große Reifen- bzw. Felgendurchmesser bietet die Füllglockengestaltung nach der Erfindung außerdem die Möglichkeit, die Bewegung des Reifens am Ende des Füllvorgangs zu unterstützen, so dass der Reifen mit größerer Genauigkeit und Zuverlässigkeit die vorbestimmte Montageendlage auf der Felge erreicht. Figur 9 veranschaulicht die Situation gegen Ende des Reifenfüllvorgangs. Der Reifen 50 ist mit Druckluft gefüllt und wird mit seiner oberen Seitenwand 51 an den aus Segmenten 4 gebildeten Ringflansch 2 der Füllglocke 1 gedrückt. In der Gegenrichtung liegen die untere Seitenwand des Reifens 50 und die Felge 52 auf einer nicht dargestellten Auflageplatte auf. Damit der Reifen 50 unter der Wirkung des Fülldrucks mit seinem Wulst 53 über den Hump 54 in seinen Sitz 55 am Felgenhorn 56 springen kann, muss sich die Seitenwand 51 radial nach außen bewegen können. Bei den bisher bekannten Füllstationen und Füllglocken muss der Reifen hierbei die Reibungskräfte an der Füllglockenkante und der Auflageplatte überwinden. Ist die Reibung zu groß, so kann dies dazu führen, dass der Reifenwulst 53 nicht über den Hump springt und sich nicht satt in der Hohlfläche des Sitzes 55 am Felgenhorn 56 anlegt. Ist dies der Fall, so weist das Rad eine hohe Ungleichförmigkeit beim Abrollen auf.

Mit der Füllglocke nach der Erfindung können solche Montagefehler wirksam vermieden werden. So kann eine Möglichkeit darin bestehen, während des kritischen Augenblicks des Füllvorgangs den Ringflansch 2 beispielsweise mit Hilfe der Steuerscheibe 42 derart zu betätigen, dass er seinen Durchmesser vergrößert. Durch eine solche radiale Vergrößerung des Ringflansches 2 wird die radiale Bewegung der Reifenseitenwand unterstützt und das Überspringen des Humps erleichtert. Eine Alternative könnte ferner darin bestehen, den Antrieb zur radialen Verstellung des Ringflansches 2 momentenfrei zu schalten und es dadurch dem Reifen 50 zu erlauben, den Ringflansch 2 selbsttätig aufzuweiten. Da sich die Segmente des Ringflansches 2 jedoch nicht nur radial bewegen, sondern gleichzeitig eine tangentiale Verschiebung benötigen, könnte es in diesem Fall zweckmäßig sein, die Füllglocke zusätzlich frei drehbar zu lagern, um die Bewegung der Segmente zu erleichtern.

Da sich vergleichbare Probleme auch bei der unteren Reifenseitenwand ergeben, kann es vorteilhaft sein, wenn auch im Bereich der Auflageplatte ein radial verstellbarer Ringflansch aus keilförmigen Segmenten angeordnet ist, der mittels Antrieb oder selbsttätig der Verformung der Reifenseitenwand folgen kann.

## Patentansprüche

1. Füllglocke (1) zum Füllen eines auf einer Felge angeordneten, schlauchlosen Reifens mit einem unter Druck stehenden Gas, mit einer an eine Seitenwand des Reifens andrückbaren, ringförmigen Dichtfläche (3) und einer zentralen Öffnung (6), in welche die Felge eindringen kann, wobei die Dichtfläche (3) von einem die Öffnung umgebenden Ringflansch (2) gebildet ist, **dadurch gekennzeichnet, dass** der Ringflansch (2) eine Mehrzahl keilförmiger Segmente (4) aufweist, deren Breite mit dem Abstand von der Öffnung (6) zunimmt und die relativ zueinander und im wesentlichen radial zur Öffnung (6) bewegbar sind.

2. Füllglocke nach Anspruch 1, **dadurch gekennzeichnet, dass** die Segmente (4) an ihren divergierenden Rändern formschlüssig und längsbeweglich miteinander verbunden sind.

3. Füllglocke nach einem der Ansprüche 1 oder 2, **dadurch gekennzeichnet, dass** zwischen den divergierenden Rändern benachbarter Segmente (4a, 4b) jeweils ein Dichtelement (25) angeordnet ist.

4. Füllglocke nach Anspruch 3, **dadurch gekennzeichnet, dass** das Dichtelement (25) ein Profilstreifen aus Kunststoff ist, der den Zwischenraum zwischen den Segmenten (4a, 4b) ausfüllt und eine Gleitführung zum Bewegen der Segmente (4a, 4b) bildet.

5. Füllglocke nach einem der vorhergehenden Ansprüche, **dadurch gekennzeichnet, dass** die Segmente (4a) Bohrungen (26) zur Zuführung eines Schmiermittels aufweisen.

6. Füllglocke nach einem der vorhergehenden Ansprüche, **dadurch gekennzeichnet, dass** die Segmente (4) auf ihrer der Dichtfläche abgekehrten Seite einen Lagerzapfen (15) haben, mit dem sie an einer Trägerplatte (12) radial beweglich und drehbar geführt und gehalten sind.

7. Füllglocke nach einem der vorhergehenden Ansprüche, **dadurch gekennzeichnet, dass** die Segmente (4) durch ein Betätigungselement gemeinsam bewegbar sind.

8. Füllglocke nach einem der vorhergehenden Ansprüche, **dadurch gekennzeichnet, dass** das Betätigungselement eine an der Füllglocke drehbar gelagerte Steuerscheibe (42) ist, die auf die Lagerzapfen (15) einwirkende, sich radial und in Umfangsrichtung erstreckende Wirkflächen hat.

9. Füllglocke nach einem der Ansprüche 7 oder 8, **dadurch gekennzeichnet, dass** ein Lagerzapfen (15) einen zylindrischen Schaft (16) und an seinem freien Ende einen zylindrischen Kopf (17) größeren Durchmessers hat, dass der Schaft (16) des Lagerzapfens (15) einen radialen Schlitz (14) in der Trägerplatte (12) durchgreift und der Kopf (17) auf der dem Segment (4) abgekehrten Rückseite der Trägerplatte (12) aufliegt und in eine Antriebsausnehmung des Betätigungselements eingreift.

## Claims

1. Filling bell (1) for filling a tubeless tyre arranged on a wheel rim with a pressurised gas, comprising an annular sealing face (3) which can be pressed onto a side wall of the tyre and a central opening (6), into which the wheel rim can penetrate, wherein the sealing face (3) is formed by an annular flange (2) which surrounds the opening **characterised in that** the annular flange (2) comprises a plurality of wedge-shaped segments (4), of which the width increases away from the opening (6) and which are displaceable relative to one another and substantially radially relative to the opening (6).

2. Filling bell according to claim 1, **characterised in that** the segments (4) are positively and longitudinally displaceably connected to one another at their divergent edges.

3. Filling bell according to either claim 1 or claim 2, **characterised in that** a sealing element (25) is arranged between each of the divergent edges of adjacent segments (4a, 4b).

4. Filling bell according to claim 3, **characterised in that** the sealing element (25) is a profiled strip made of a plastics material which fills the space between the segments (4a, 4b) and forms a sliding guide for moving the segments (4a, 4b).

5. Filling bell according to any one of the preceding claims, **characterised in that** the segments (4a) comprise holes (26) for supplying a lubricant.

6. Filling bell according to any one of the preceding claims, **characterised in that** on their side remote from the sealing face the segments (4) have a journal (15), by which means they are radially displaceably and rotatably guided and held on a carrier plate (12).

7. Filling bell according to any one of the preceding claims, **characterised in that** the segments (4) are collectively displaceable by an actuation element.

8. Filling bell according to any one of the preceding claims, **characterised in that** the actuation element is a disc cam (42) which is rotatably mounted on the filling bell and has effective surfaces which act on the journal (15) and extend radially and in the circumferential direction.

9. Filling bell according to either claim 7 or claim 8, **characterised in that** a journal (15) has a cylindrical shaft (16) and at its free end a cylindrical head (17) with a larger diameter, and **in that** the shaft (16) of the journal (15) penetrates through a radial slot (14) in the carrier plate (12) and the head (17) lies on the rear side of the carrier plate (12) remote from the segment (4) and engages in a driving recess of the actuation element.

## Revendications

1. Cloche de gonflage (1) pour le gonflage, au moyen d'un gaz sous pression, d'un pneumatique sans chambre à air monté sur une jante, comportant une surface étanche (3) annulaire, pouvant être appuyée sur une paroi latérale du pneumatique, et une ouverture centrale (6), dans laquelle peut pénétrer la jante, ladite surface étanche (3) étant formée par une collerette annulaire (2) entourant l'ouverture, **caractérisée en ce que** la collerette annulaire (2) comporte une pluralité de segments (4) en forme de coin, dont la largeur augmente avec la distance par rapport à l'ouverture (6) et qui peuvent être déplacés les uns par rapport aux autres et sensiblement radialement par rapport à l'ouverture (6).

2. Cloche de gonflage selon la revendication 1, **caractérisée en ce que** les segments (4) sont reliés les uns aux autres au niveau de leurs bords divergents par conjugaison de forme et de manière mobile dans le sens longitudinal.

3. Cloche de gonflage selon la revendication 1 ou 2, **caractérisée en ce qu'**un élément étanche (25) est disposé entre les bords divergents de deux segments (4a, 4b) adjacents.

4. Cloche de gonflage selon la revendication 3, **caractérisée en ce que** l'élément étanche (25) est une bande profilée en matière plastique qui comble l'interstice entre les segments (4a, 4b) et forme un guide coulissant pour le mouvement des segments (4a, 4b).

5. Cloche de gonflage selon l'une quelconque des revendications précédentes, **caractérisée en ce que** les segments (4a) comportent des forures (26) pour l'admission d'un lubrifiant.

6. Cloche de gonflage selon l'une des revendications précédentes, **caractérisée en ce que** les segments (4), sur leur face opposée à la surface étanche, ont un tourillon (15) à l'aide duquel ils sont guidés et maintenus sur une plaque support (12) de manière à pouvoir tourner et à se déplacer dans le sens radial.

7. Cloche de gonflage selon l'une des revendications précédentes, **caractérisée en ce que** les segments (4) peuvent être déplacés conjointement au moyen d'un élément de manoeuvre.

8. Cloche de gonflage selon l'une des revendications précédentes, **caractérisée en ce que** l'élément de manoeuvre est un disque de commande (42), qui est monté rotatif sur la cloche de gonflage et qui comporte des surfaces actives qui agissent sur les tourillons (15) et s'étendent radialement et en direction de la périphérie.

9. Cloche de gonflage selon la revendication 7 ou 8, **caractérisée en ce qu'**un tourillon (15) possède une tige (16) cylindrique et, au niveau de son extrémité libre, une tête (17) cylindrique de plus grand diamètre, **en ce que** la tige (16) du tourillon (15) passe à travers une fente (14) radiale dans la plaque de support (12), et la tête (17) est en appui sur la face arrière, opposée au segment (4), de la plaque de support (12) et s'engage dans un évidement d'entraînement de l'élément de manoeuvre.
